# EUROPÄISCHE PATENTSCHRIFT

(11) **EP 2 255 101 B1**
(45) Veröffentlichungstag und Bekanntmachung des Hinweises auf die Patenterteilung: **22.06.2011**
(21) Anmeldenummer: 09712216.2
(22) Anmeldetag: 18.02.2009
(51) Int. Cl.: F16D 65/097

(54) **BREMSBELAG FÜR EINE SCHEIBENBREMSE**
BRAKE LINING FOR A DISC BRAKE
GARNITURE DE FREIN POUR UN FREIN À DISQUE

(30) Priorität: 22.02.2008 DE 102008010570
(43) Veröffentlichungstag der Anmeldung: 01.12.2010
(73) Patentinhaber: KNORR-BREMSE Systeme für Nutzfahrzeuge GmbH, 80809 München (DE)
(72) Erfinder: CAMILO-MARTINEZ, José, 82008 Unterhaching (DE); SPRINGER, Mario, 94535 Eging am See (DE)
(74) Vertreter: Mattusch, Gundula
(86) Internationale Anmeldenummer: PCT/EP2009/001134
(87) Internationale Veröffentlichungsnummer: WO 2009/103499

(56) Entgegenhaltungen:
- EP-B- 0 232 303
- WO-A-2007/068464
- DE-A1- 4 020 287
- DE-A1-102005 052 435
- US-A- 4 049 087

## Beschreibung

Die Erfindung betrifft einen Bremsbelag für eine Scheibenbremse nach dem Oberbegriff des Anspruchs 1.

Ein derartiger Bremsbelag ist aus der WO 2007/068464 A1 bekannt. Prinzipiell hat sich der daraus bekannte Bremsbelag bewährt, wobei als Vorteile die verbesserte Sicherheit hinsichtlich einer Nichtwiederverwendbarkeit der Belaghaltefeder sowie eine Verbesserung der Federcharakteristik hervorzuheben sind. Zum Stand der Technik werden noch die DE 40 20 287 A1, die EP 232 303 B1, die US 5 064 028 A, die US 4 784 242 A und die US 4 049 087 A genannt.

Für ein optimales Federverhalten muss die Belaghaltefeder eine entsprechende Breite aufweisen, die größer ist als die Dicke der Belagträgerplatte, so dass die Belaghaltefeder zumindest einseitig über die Belagträgerplatte vorsteht.

Zur Befestigung der Haube an der Belagträgerplatte, greift einer der beiden parallelen Schenkel der in einem Abschnitt U-förmig gebogenen Haube, formschlüssig in die Belagträgerplatte ein. Um die beiden Schenkel möglichst nah an den zugeordneten Seiten der Belagträgerplatte zu führen, muss die Belaghaltefeder im Übergriffsbereich der Haube so weit ausgenommen sein, dass sie dort in ihrer Breite etwa der Dicke der Belagträgerplatte entspricht. D.h., die Belaghaltefeder ist im Überdeckungsbereich mit der Haube schmaler als im Bereich der sich beidseitig anschließenden Federschenkel.

Wie sich gezeigt hat, besteht in dem ausgenommenen Bereich u.U. die Gefahr eines Dauerbruchs, da die Belaghaltefeder funktionsbedingt häufigen radialen Auslenkungen, sprich Lastwechseln ausgesetzt ist.

Einer angestrebten optimierten Standzeit des Bremsbelages steht dieser Umstand natürlich entgegen, wobei ein ausschließlich dadurch bedingtes Auswechseln des Bremsbelages zu erheblichen Mehrkosten führt, die sich aus der Neubeschaffung eines Bremsbelages, den Montage- bzw. Demontagekosten sowie den Kosten für die Nichtbetriebsbereitschaft des Fahrzeuges ergeben.

Der Erfindung liegt die Aufgabe zugrunde, einen Bremsbelag der gattungsgemäßen Art so weiterzuentwickeln, dass mit geringem konstruktivem und fertigungstechnischem Aufwand dessen Standzeit, insbesondere die der Belaghaltefeder verlängert wird.

Diese Aufgabe wird durch einen Bremsbelag mit den Merkmalen des Anspruchs 1 gelöst.

Durch die Erfindung besteht nun die Möglichkeit, die Belaghaltefeder in ihrer Breite vorzugsweise auch gleichbleibend zu gestalten, wodurch sich zum einen eine notwendige und ausreichende Dauerbruchfestigkeit auch im Überdeckungsbereich mit der Haube ergibt und zum anderen die Federcharakteristik im Wesentlichen über die gesamte Länge der Belaghaltefeder im festgelegten und gewünschten Maße unverändert bleibt, d.h., eine Veränderung durch Materialschwächung wird im Wesentlichen vermieden.

Nach einer vorteilhaften Weiterbildung der Erfindung ist die in der Belaghaltefeder vorgesehene Öffnung als Längsschlitz ausgebildet, dessen Breite etwa der Dicke des Bleches, aus dem die Haube gefertigt ist, und dessen Länge etwa der Breite der Haube im durchgesteckten Bereich entspricht. Insoweit ist die Belaghaltefeder auch gegen ein Längsverschieben gesichert.

Nach einer vorteilhaften Weiterbildung der Erfindung wird der U-förmige Abschnitt der Haube nach einer Montage, also nach einer Befestigung an der Belagträgerplatte durch einen parallel zum auf der Belaghaltefeder aufliegenden Steg verlaufenden Verbindungssteg zu einem umfänglich geschlossenen Gebilde geformt, wobei das freie Ende des Verbindungssteges mit dem zugeordneten Schenkel stoffschlüssig verbunden sein kann, vorzugsweise durch Verschweißen. Denkbar ist jedoch auch eine formschlüssige Verbindung, wobei dann ineinandergreifende Formschlussmittel des Schenkels einerseits und des Verbindungssteges andererseits vorgesehen sind.

Zur Durchführung des Verbindungssteges weist die Belagträgerplatte eine Durchgangsöffnung auf, die so bemessen ist, dass eine Längsverschiebung der Belaghaltefeder und der daran befestigten Haube weitgehend ausgeschlossen ist, während eine radiale Bewegung, entsprechend dem Federhub ohne weiteres möglich ist.

Hierzu kann eine rechteckige oder quadratische Öffnung in der Belagträgerplatte vorgesehen sein, die dann, wenn die Belagträgerplatte gegossen ist, gleich mit eingegossen wird, oder, wenn die Belagträgerplatte aus einem Blechformteil besteht, eingestanzt wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figuren 1 bis 3: einen erfindungsgemäßen Bremsbelag jeweils in unterschiedli- chen Ansichten
- Figuren 4 und 5: jeweils eine Einzelheit des Bremsbelages in perspektivischen An- sichten;
- Figur 6a-c: verschiedene Ausführungsbeispiele von Hauben von Bremsbelä- gen;
- Figur 7: eine Ansicht eines weiteren Bremsbelages;
- Figur 8: eine Belagträgerplatte für den Bremsbelag aus Fig. 6; und
- Figur 9: eine weitere Belagträgerplatte.

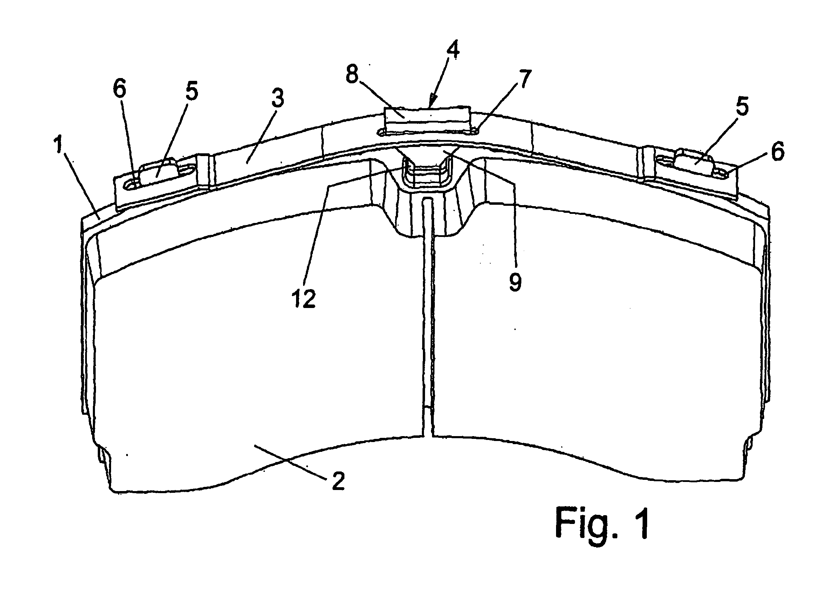

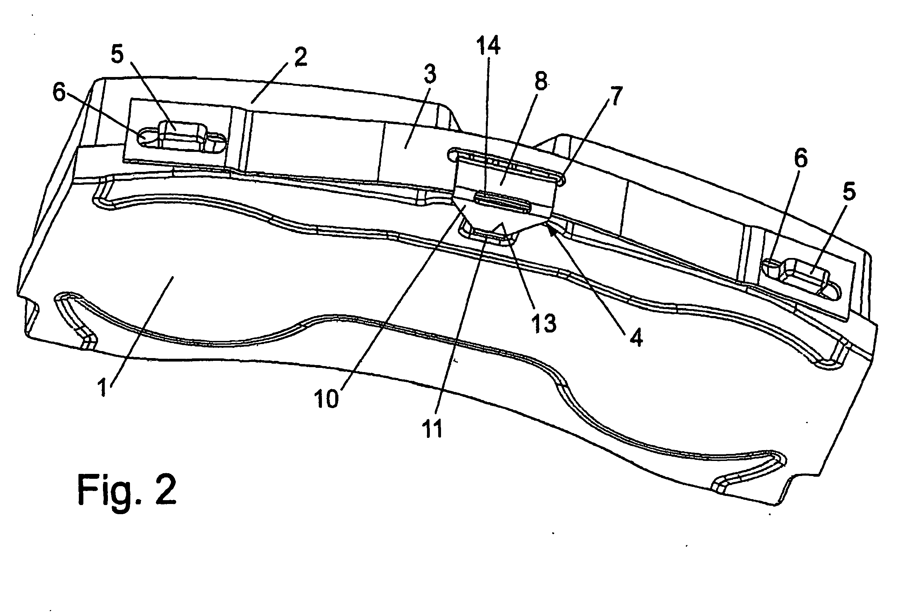

In den Figuren 1 bis 3 ist ein Bremsbelag für eine Scheibenbremse dargestellt, der in seinem Grundaufbau aus einer vorzugsweise gegossenen Belagträgerplatte 1 und einem daran befestigten Reibbelag 2 besteht, der bei einer Bremsung mit einer Bremsscheibe der Scheibenbremse reibend in Kontakt gebracht wird.

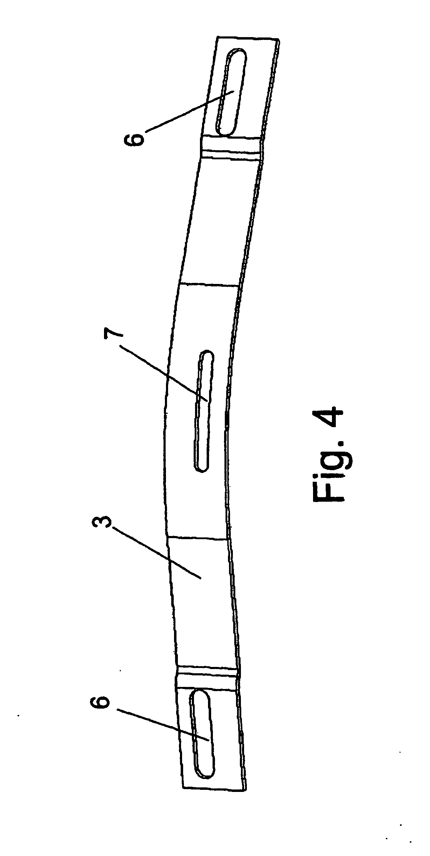

An einer Längskante der Belagträgerplatte 1 ist eine Belaghaltefeder 3 vorzugsweise unlösbar befestigt bzw. angeordnet/gehalten, wobei an beiden sich gegenüberliegenden Endbereichen der Belaghaltefeder 3 Schlitze 6 vorgesehen sind, die von an die Belagträgerplatte 1 angeformten Laschen 5 durchtreten werden. Die Belaghaltefeder 3 ist als Einzelheit in der Figur 4 dargestellt.

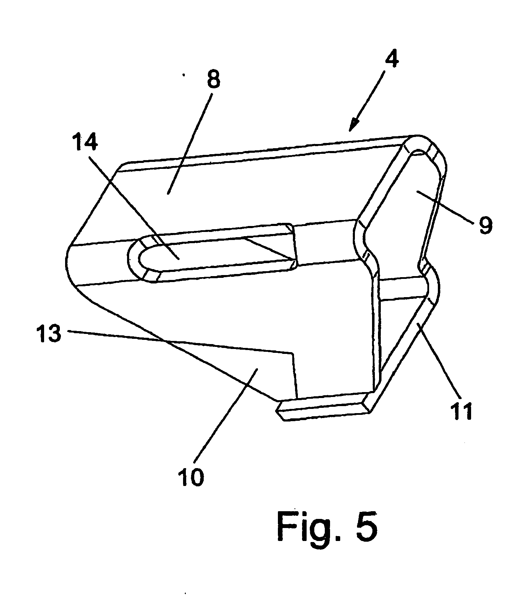

Zur vorzugsweise unlösbaren Verbindung der Belaghaltefeder 3 mit der Belagträgerplatte 1 ist eine Haube 4 vorgesehen, die, wie insbesondere die Figur 5, in der die Haube 4 einzeln gezeigt ist, einen im Querschnitt U-förmigen Abschnitt aufweist, mit zwei parallelen Schenkeln 9, 10, die durch einen Steg 8 miteinander verbunden sind.

Etwa symmetrisch zwischen den Schlitzen 6 ist in die Belaghaltefeder 3 ein Längsschlitz 7 eingebracht, durch den der Schenkel 10 gesteckt ist, der ebenso wie der gegenüberliegende Schenkel 9 an einer zugeordneten Breitseite der Belagträgerplatte 1 anliegt oder nahezu anliegt.

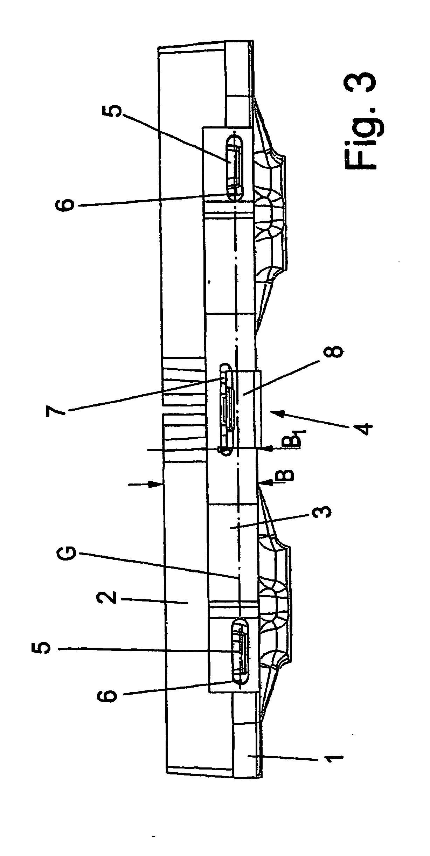

Wie in der Figur 3 deutlich erkennbar ist, ist die Belaghaltefeder 3 breiter als die Dicke der Belagträgerplatte 1, so dass die Belaghaltefeder 3 in Richtung des Reibbelages 2 übersteht, während ihre andere Längskante etwa mit der Rückseite der Belagträgerplatte 1 fluchtet.

In der Figur 5 ist auch zu erkennen, dass sich an den Schenkel 9 ein Verbindungssteg 11 anschließt, der parallel zum Steg 8 verläuft und der eine in der Belagträgerplatte 1 vorgesehene Ausnehmung 12 durchtritt (Figur 1) und mit dem anderen Schenkel 10 eine Verbundnaht 13 bildet, die beispielsweise durch Schweißen hergestellt sein kann, wenn die Haube 4 montiert ist.

Durch diese stoffschlüssige Verbindung ist ein zerstörungsfreies Lösen der Haube 4 ausgeschlossen, wodurch eine sichere Befestigung der Belaghaltefeder 3 gewährleistet ist.

Im Übrigen sind die Schenkel in ihrem Grundriss trapezförmig gestaltet, wobei die Breitseite durch den Steg 8 gebildet wird, während der Verbundsteg 11 die schmalere Seite definiert.

Zur leichteren Umformung der Haube 4 nach einer Montage, d.h. nach einem Aufsetzen auf die Belaghaltefeder 3 und Durchführen des Verbundschenkels 11 durch die Ausnehmung 12, ist zwischen dem Steg 8 und dem Schenkel 10 eine quer zur Biegerichtung verlaufende Wandschwächung in Form einer Aussparung 14 vorgesehen, so dass der Schenkel 10 gegenüber dem Steg 8 mit geringem Kraftaufwand umgebogen werden kann.

Wie bereits ausgeführt, ist der Längsschlitz 7, bezogen auf die Längserstreckung der Belaghaltefeder, vorzugsweise etwa mittig angeordnet. Ganz besonders bevorzugt ist er genau mittig angeordnet. Zudem entspricht der Längsschlitz in seiner Länge etwa der Breite B und der Dicke D des eingesteckten Schenkels 9, der aber in noch in den Längsschlitz 7 einsteckbar sein muss.

Nach einer Ausführung (hier nicht dargestellt) können die der Führung der Belaghaltefeder an ihren Enden dienenden Schlitze 6 und der Längsschlitz 7 miteinander fluchten. Bevorzugt liegen der Längsschlitz 7 und die Schlitze 6 aber, wie beispielsweise in Fig. 3 zu erkennen, nicht auf einer Geraden G.

Besonders bevorzugt fluchten insofern die beiden der Führung dienenden Schlitze 6 miteinander, während der Längsschlitz 7 parallel beabstandet zu der Geraden G liegt, welche die beiden Schlitzen 6 durchsetzt bzw. miteinander verbindet (Fig. 3).

Anders als in Fig. 3 gezeigt, kann die Haube auch um 180° gedreht am Belag montiert werden, so dass die Aussparung 14 zum Belagträgermaterial hin orientiert ist.

Weiter bevorzugt ist der Breite B 1 des Bereiches der Belaghaltefeder, welchen die Haube 4 übergreift, um eine genügende Stabilität der Anordnung zu gewährleisten, vorzugsweise größer als die Hälfte der Gesamtbreite B der Belaghaltefeder.

Die Gerade G, welche die Schlitze 6 miteinander verbindet, durchsetzt dabei den von der Haube 4 übergriffenen Bereich der Belaghaltefeder 3 , was eine besonders vorteilhaft stabile Anordnung gewährleistet.

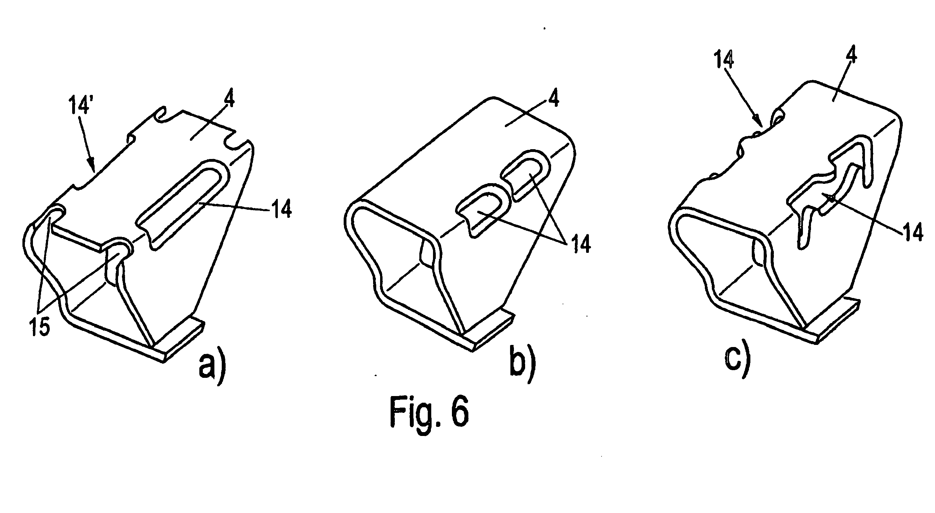

Die Figuren 6a bis 6c zeigen Varianten von Hauben 4, die sich insbesondere hinsichtlich der Aussparungen 14 voneinander unterscheiden.

Nach Fig. 6a wird jeweils eine längere Aussparung 14 zwischen dem Steg 8 und dem Schenkel 10 durch Randaussparungen 15 ergänzt, welche die Aussparung 14 ergänzen, wodurch der Schenkel 10 gegenüber dem Steg 8 mit nochmals geringerem Kraftaufwand umgebogen werden kann. Zudem, ist eine weitere Aussparung 14' zwischen dem Steg 8 und dem Schenkel 9 vorgesehen, um auch in diesem Bereich das Biegen der Haube 4 bei deren Herstellung zu erleichtern.

Nach Fig. 6b sind dagegen jeweils im Bereich jeder Biegung zwei (oder mehr) Aussparungen 14, 14' zwischen dem Steg 8 und den beiden angrenzenden Schenkeln 9, 10 vorgesehen, die nach dem Umbiegen genau im Bereich der jeweiligen Biegelinien liegen.

Nach Fig. 6c ist vorgesehen, dass die Aussparungen konturiert ausgebildet sind, was das Biege- und Stabilitätsverhalten nochmals optimieren kann. So können die Aussparungen langgestreckt ausgebildet sein (Fig. 6a) oder beispielsweise bei ihrem Ausstanzen vor dem Umbiegen zunächst eine Art W- oder M-Kontur ausbilden (Fig. 6c).

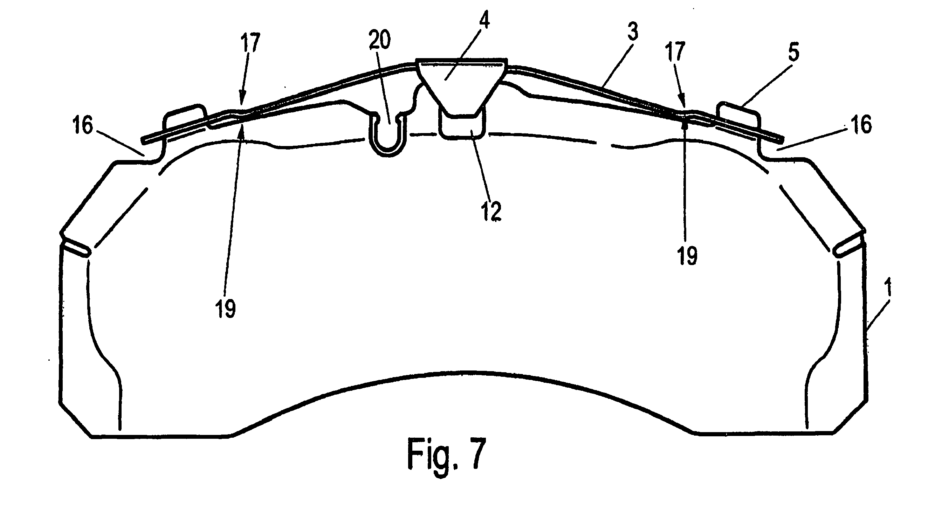

Fig. 7 zeigt eine Seitenansicht eines weiteren Bremsbelags. Besonders gut zu erkennen ist die Ausnehmung 12, welche sich in der Belagträgerplatte 1 radial erstreckt, so dass ein entsprechendes radiales Auslenken der Haube in der Ausnehmung 12 möglich ist (z.B. um mehr als 2 mm).

Die Belagträgerplatte 1 ist jeweils von der Haube 4 ausbetrachtet außerhalb der Laschen 5 mit Umfangsrandaussparungen 16 versehen, die derart ausgelegt sind, dass die von der Haube 4 abgewandten Ende der Belaghaltefeder 3 in sie eingreifen. Die Belaghaltefeder 3liegt damit nicht im Bereich ihrer äußersten von der Haube 4 abgewandten Enden auf der Belagträgerplatte 1 auf sondern in Stufungsbereichen 17 zwischen den Laschen 5 der Belagträgerplatte 1, woraus sich ein besonders vorteilhaftes Federungsverhalten ergibt.

Die Stufungsbereiche 17 werden durch ein entsprechendes Biegen der Belaghaltefeder 3 hergestellt. Sie sind derart ausgelegt, dass die Belaghaltefeder 3ausgehend von den Auflagebereichen 19 auf der Belagträgerplatte 1 von der Belagträgerplatte 1 zunächst von dieser weg "nach oben" und dann "nach außen" hin umgebogen sind. Hierdurch ergibt sich ein entsprechender Sprung in der Federkennlinie, der sich wiederum vorteilhaft auf die Stabilität der Anordnung und deren Verhalten im Betrieb auswirkt.

Denkbar wäre es dann auch, dass die äußeren Schlitze 6 an ihren voneinander abgewandten Enden nach außen hin offen ausgebildet sind. Schließlich könnten zur Führung der Belaghaltefeder 5 an ihren Enden auch andere Mittel als die korrespondierenden Schlitze 6 und die Laschen 5 vorgesehen sein, obwohl der Laschen 5 und Aussparungen 6 als besonders einfach, funktionssicher und günstig bevorzugt werden.

Anzumerken ist noch, dass die Ausnehmung 12 und der Abstand zwischen der Belaghaltefeder 3 und dem Umfangsrand der Belagträgerplatte im Bereich der Haube 4 radial vorzugsweise derart bemessen sind, dass die Haube 4 in der Ausnehmung 12 nicht an deren unterem Rand - also an dem von der Belaghaltefeder 3 abgewandten unteren Rand der Ausnehmung 12 - zur Anlage kommen kann. Damit ist die Haube 4 zwar vorzugsweise gemeinsam mit der Belaghaltefeder 3radial in der Ausnehmung 12 auslenkbar, sie kann aber nicht am unteren Rand der Ausnehmung 12 anschlagen, was sich wiederum vorteilhaft auf das Verhalten der Anordnung auswirkt.

In der Seitenansicht der Fig. 7 ist ferner zu erkennen, dass die Haube 4 von ihrem die Belaghaltefeder 3 umgreifenden Bereich zur Ausnehmung 12 hin schmaler wird, vorzugsweise ist sie trapezförmig ausgestaltet.

Vorzugsweise durchsetzt die Haube 4 die Belaghaltefeder 3, da sie derart auch besonders gut verliergesichert an der Belagträgerplattel gehalten ist und sich vorzugsweise an dieser abstützt.

Alternativ könnte sie aber bei einer weniger bevorzugten Ausführung auch in radiale Nuten auf beiden Seiten der Belagträgerplatte eingreifen und diesen nicht vollständig durchsetzen (nicht dargestellt).

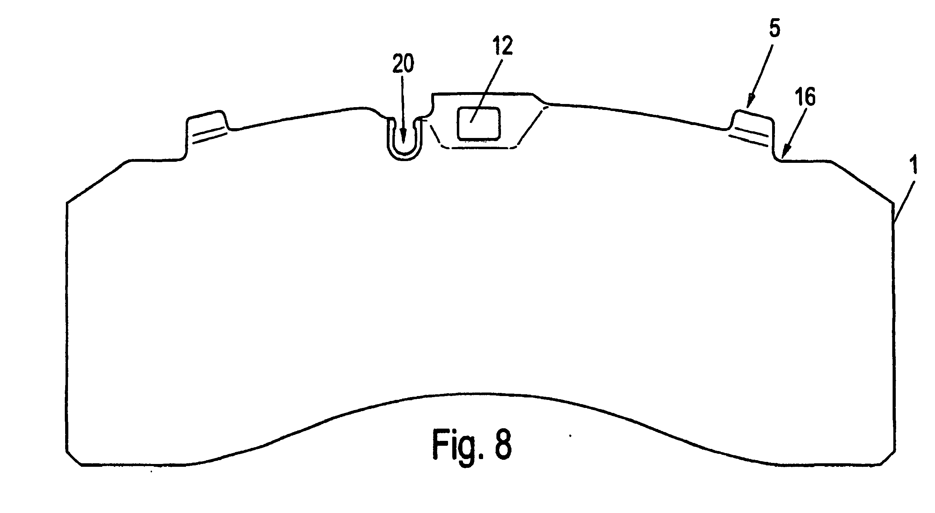

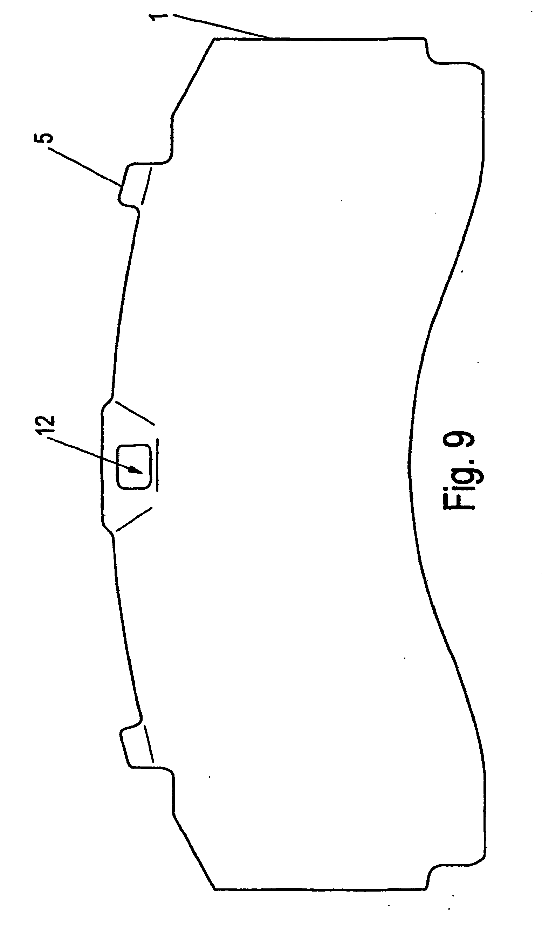

Anzumerken ist noch, dass in Fig. 8 noch eine Ausnehmung 20 im Umfangsrand der Belagträgerplatte 1 vorgesehen ist, welche vorzugsweise zur Aufnahme eines an sich bekannten Verschleisssensors dient. Diese Ausnehmung ist in Fig. 9 nicht vorhanden.

Die Längs des Längsschlitzes liegt vorzugsweise zwischen 10 und 40 mm.

### Bezugszeichenliste

- 1: Belagträgerplatte
- 2: Reibbelag
- 3: Belaghaltefeder
- 4: Haube
- 5: Lasche
- 6: Schlitz
- 7: Längsschlitz
- 8: Steg
- 9: Schenkel
- 10: Schenkel
- 11: Verbindungssteg
- 12: Ausnehmung
- 13: Verbundnaht
- 14: Aussparung (auch 14')
- 15: Randaussparung
- 16: Umfangsrandaussparung
- 17: Stufungsbereich
- 18: -
- 19: Auflagebereich
- 20: Ausnehmung
- G: Gerade
- B, B1: Breiten

## Patentansprüche

1. Bremsbelag für eine Scheibenbremse, insbesondere für ein Nutzfahrzeug, mit einer als bogenförmige Blattfeder ausgebildeten Belaghaltefeder (3), die radial auslenkbar und mittels einer Haube (4) an einer einen Reibbelag (2) tragenden Belagträgerplatte (1) befestigt ist, wobei die Haube (4) als separates Bauteil ausgebildet ist und einen im Querschnitt U-förmigen Abschnitt aufweist, dessen die beiden parallelen und beidseitig der Belagträgerplatte (1) geführten Schenkel (9, 10) verbindender Steg (8) an der Belaghaltefeder (3) anliegt, **dadurch gekennzeichnet, dass** die Belaghaltefeder (3) eine Öffnung aufweist, durch die ein Schenkel (9) der Haube (4) geführt ist.

2. Bremsbelag nach Anspruch 1, **dadurch gekennzeichnet, dass** die Öffnung als Längsschlitz (7) ausgebildet ist.

3. Bremsbelag nach Anspruch 1 oder 2, **dadurch gekennzeichnet, dass** die Belaghaltefeder (3) über die gesamte Länge die gleiche Breite aufweist.

4. Bremsbelag nach einem der vorhergehenden Ansprüche, **dadurch gekennzeichnet, dass** der Längsschlitz (7), bezogen auf die Längserstreckung, etwa mittig, insbesondere genau mittig, angeordnet ist.

5. Bremsbelag nach einem der vorhergehenden Ansprüche, **dadurch gekennzeichnet, dass** der Längsschlitz (7) in seiner Länge etwa der Breite des eingesteckten Schenkels (9) entspricht.

6. Bremsbelag nach einem der vorhergehenden Ansprüche, **dadurch gekennzeichnet, dass** der Längsschlitz (7) in seiner Breite etwa der Dicke des eingesteckten Schenkels (9) entspricht.

7. Bremsbelag nach einem der vorhergehenden Ansprüche, **dadurch gekennzeichnet, dass** der Längsschlitz (7) einerseits und die beiden Schlitze (6) andererseits nicht miteinander fluchten.

8. Bremsbelag nach einem der vorhergehenden Ansprüche, **dadurch gekennzeichnet, dass** parallel zum Steg (8) ein Verbundsteg (11) an einen Schenkel (9) angeformt ist, der eine in der Belagträgerplatte (1) vorgesehene Ausnehmung (12) durchtritt.

9. Bremsbelag nach einem der vorhergehenden Ansprüche, **dadurch gekennzeichnet, dass** der Verbundsteg (11) mit dem anderen Schenkel (10) form- oder stoffschlüssig verbunden ist.

10. Bremsbelag nach einem der vorhergehenden Ansprüche, **dadurch gekennzeichnet, dass** zumindest eine Biegekante zwischen dem Schenkel (9) und dem Steg (8) und/oder dem Schenkel (10) und dem Steg (8) jeweils wenigstens eine Aussparung (14) oder mehrere Aussparungen (14, 14')aufweist.

11. Bremsbelag nach einem der vorhergehenden Ansprüche, **dadurch gekennzeichnet, dass** zumindest eine Biegekante zwischen dem Schenkel (9) und dem Steg (8) und/oder dem Schenkel (10) und dem Steg (8) jeweils wenigstens eine oder mehrere Randaussparungen aufweist.

12. Bremsbelag nach einem der vorhergehenden Ansprüche, **dadurch gekennzeichnet, dass** sich die wenigstens eine Aussparung (14) in Richtung der Biegekante erstreckt.

13. Bremsbelag nach einem der vorhergehenden Ansprüche, **dadurch gekennzeichnet, dass** die wenigstens eine Aussparung (14) eine W-Form aufweist.

14. Bremsbelag nach einem der vorhergehenden Ansprüche, **dadurch gekennzeichnet, dass** die Belagträgerplatte (1) jeweils von der Haube (4) aus außerhalb der Laschen (5) mit Umfangsrandaussparungen (16) versehen ist, die derart ausgelegt sind, dass die von der Haube (4) abgewandten Enden der Belaghaltefeder in sie eingreifen.

15. Bremsbelag nach einem der vorhergehenden Ansprüche, **dadurch gekennzeichnet, dass** die Belaghaltefeder nicht im Bereich ihrer äußersten von der Haube 4 abgewandten Enden auf der Belagträgerplatte (1) aufliegt sondern in Stufungs- bzw. Biegebereichen (17) zwischen den Laschen (5) der Belagträgerplatte (1).

## Claims

1. Brake pad for a disc brake, in particular for a commercial vehicle, comprising an anti-rattle spring (3) which is designed as an arc-shaped leaf spring, is radially deflectable and secured by means of a hood (4) to a backing plate (1) which supports a friction lining (2), wherein the hood (4) is designed as a separate component and has a section which is U-shaped in cross section, its web (8) which connects the two legs (9, 10) which are guided in parallel on both sides of the backing plate (1) bearing against the anti-rattle spring (3), **characterised in that** the anti-rattle spring (3) has an opening through which a leg (9) of the hood (4) is guided.

2. Brake pad according to claim 1, **characterised in that** the opening is designed as a longitudinal slot (7).

3. Brake pad according to claim 1 or 2, **characterised in that** the anti-rattle spring (3) has the same width over its entire length.

4. Brake pad according to any of the preceding claims, **characterised in that** the longitudinal slot (7) is arranged approximately centrally, in particular exactly centrally, in relation to the longitudinal dimension.

5. Brake pad according to any of the preceding claims, **characterised in that** the longitudinal slot (7) corresponds in length approximately to the width of the inserted leg (9).

6. Brake pad according to any of the preceding claims, **characterised in that** the longitudinal slot (7) corresponds in length approximately to the thickness of the inserted leg (9).

7. Brake pad according to any of the preceding claims, **characterised in that** the longitudinal slot (7) on the one hand and the two slots (6) on the other hand are not aligned with one another.

8. Brake pad according to any of the preceding claims, **characterised in that** a connecting web (11) is integrally formed, parallel to the web (8), on a leg (9) which passes through a recess (12) which is provided in the backing plate (1).

9. Brake pad according to any of the preceding claims, **characterised in that** the connecting web (11) is joined to the other leg (10) either positively or by adhesive force.

10. Brake pad according to any of the preceding claims, **characterised in that** at least one bending edge between the leg (9) and the web (8) and/or between the leg (10) and the web (8) has in each case at least one cut-out (14) or a plurality of cut-outs (14, 14').

11. Brake pad according to any of the preceding claims, **characterised in that** at least one bending edge between the leg (9) and the web (8) and/or between the leg (10) and the web (8) has in each case at least one or more edge cut-outs.

12. Brake pad according to any of the preceding claims, **characterised in that** the at least one cut-out (14) extends in the direction of the bending edge.

13. Brake pad according to any of the preceding claims, **characterised in that** the at least one cut-out (14) has a W-shape.

14. Brake pad according to any of the preceding claims, **characterised in that** the backing plate (1) is provided, in each case extendding from the hood (4) and outside the lugs (5), with peripheral edge cut-outs (16) which are designed such that those ends of the anti-rattle spring which face away from the hood (4) engage the said peripheral edge cut-outs (16).

15. Brake pad according to any of the preceding claims, **characterised in that** the anti-rattle spring bears against the backing plate (1) not in the region of its outermost ends, which face away from the hood (4), but rather in step or bend regions (17) between the lugs (5) of the backing plate (1).

## Revendications

1. Garniture de frein pour un frein à disque, notamment pour un véhicule utilitaire, comprenant un ressort (3) de maintien de garniture constitué en ressort à lame en forme d'arceau, qui peut être dévié radialement et qui est fixé au moyen d'un capot (4) à une plaque (1) de support de garniture portant une garniture (2) de frein, le capot (4) étant constitué sous la forme d'un élément distinct et ayant un segment en forme de U en section transversale, dont l'âme (8), reliant les deux branches (9, 10) parallèles et guidées des deux côtés de la plaque (1) de support de la garniture, s'applique au ressort (3) de maintien de la garniture, **caractérisée en ce que** le ressort (3) de maintien de la garniture a une ouverture, dans laquelle est guidée l'une des branches (9) du capot (4).

2. Garniture de frein suivant la revendication 1, **caractérisée en ce que** l'ouverture est constituée sous la forme d'une boutonnière (7).

3. Garniture de frein suivant la revendication 1 ou 2, **caractérisée en ce que** le ressort (3) de maintien de la garniture a la même largeur sur toute la longueur.

4. Garniture de frein suivant l'une des revendications précédentes, **caractérisée en ce que** la boutonnière (7) est disposée, rapportée à l'étendue longitudinale, à peu près au milieu, notamment exactement au milieu.

5. Garniture de frein suivant l'une des revendications précédentes, **caractérisée en ce que** la longueur de la boutonnière (7) correspond à peu près à la largeur de la branche (9) enfilée.

6. Garniture de frein suivant l'une des revendications précédentes, **caractérisée en ce que** la largeur de la boutonnière (7) correspond à peu près à l'épaisseur de la branche (9) enfilée.

7. Garniture de frein suivant l'une des revendications précédentes, **caractérisée en ce que** la boutonnière (7), d'une part, et les deux fentes (6), d'autre part, ne sont pas alignées entre elles.

8. Garniture de frein suivant l'une des revendications précédentes, **caractérisée en ce que**, parallèlement à l'âme (8), est formée sur une branche (9) une réglette (11) de liaison, qui passe dans un évidement (12) prévu dans la plaque (1) de support de la garniture.

9. Garniture de frein suivant l'une des revendications précédentes, **caractérisée en ce que** la réglette (11) de liaison est reliée à complémentarité de forme ou de matière à l'autre branche (10).

10. Garniture de frein suivant l'une des revendications précédentes, **caractérisée en ce qu'**au moins un bord cintré entre la branche (9) et l'âme (8) et/ou la branche (10) et l'âme (8) a respectivement au moins un évidement (14) ou plusieurs évidements (14, 14').

11. Garniture de frein suivant l'une des revendications précédentes, **caractérisée en ce qu'**au moins un bord cintré entre la branche (9) et l'âme (8) et/ou entre la branche (10) et l'âme (8) a respectivement un ou plusieurs évidement latéraux.

12. Garniture de frein suivant l'une des revendications précédentes, **caractérisée en ce que** le au moins un évidement (14) s'étend dans la direction du bord cintré.

13. Garniture de frein suivant l'une des revendications précédentes, **caractérisée en ce que** le au moins un évidement (14) a une forme en W.

14. Garniture de frein suivant l'une des revendications précédentes, **caractérisée en ce que** la plaque (1) de support de la garniture est pourvue, respectivement à partir du capot (4) à l'extérieur des éclisses (5), d'évidements (6) latéraux de pourtour, qui sont conçus de manière à ce que les extrémités, éloignées du capot (4), du ressort de maintien de la garniture y pénètrent.

15. Garniture de frein suivant l'une des revendications précédentes, **caractérisée en ce que** le ressort de maintien de la garniture ne s'applique pas, dans la zone de ses extrémités éloignées les plus à l'extérieur du capot (4), à la plaque (1) de support de la garniture, mais dans des zones (17) d'échelonnement ou cintrées entre les éclisses (5) de la plaque (1) de support de la garniture.
